# EUROPEAN PATENT APPLICATION

(11) **EP 4 845 102 A1**
(43) Date of publication of application: **25.11.2026**
(21) Application number: 24925520.9
(22) Date of filing: 09.10.2024
(51) Int. Cl.: H04L 12/10

(54) **ENERGY SUPPLY METHOD, COMMUNICATION APPARATUS, AND STORAGE MEDIUM**

(30) Priority: 20.02.2024 CN 202410193063
(71) Applicant: ZTE Corporation, Shenzhen, Guangdong 518057 (CN)
(72) Inventor: SI, Yuan, Shenzhen, Guangdong 518057 (CN); DAI, Bo, Shenzhen, Guangdong 518057 (CN); ZHANG, Shujuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/123688
(87) International publication number: WO 2025/175782

(57) **Abstract**

Provided are an energy supply method, a communication apparatus, and a storage medium. The energy supply method comprises: a first node determines an energy supply service process; and the first node supplies energy to a second node on the basis of the energy supply service process.

## Description

The present disclosure claims priority to Chinese Patent Application No. 202410193063.7, filed on February 20, 2024, the entire contents of which are incorporated herein by reference.

### TECHNICAL FIELD

The present disclosure relates to the field of communication technologies, and in particular, to an energy supply method, a communication apparatus, and a storage medium.

### BACKGROUND

In an existing medium-to-long-range wireless energy supply system, a terminal device that requires energy supply and an energy supply scenario are complex and diverse. Energy supply devices are generally designed to serve only one or several specific types of terminal devices, and the energy supply devices corresponding to different energy supply scenarios or different terminal devices cannot be universally applicable. In addition, during an energy supply process, the terminal device that requires energy supply and the energy supply scenario are complex and diverse, and corresponding energy supply service procedures are constantly changing.

### SUMMARY

In an aspect, there is provided an energy supply method, applied to a first node. The energy supply method includes:
determining an energy supply service procedure; and
supplying energy to a second node based on the energy supply service procedure.

In another aspect, there is provided an energy supply apparatus, applied to a first node. The energy supply apparatus includes a processing module and an energy supply module, where:
the processing module is configured to determine an energy supply service procedure; and
the energy supply module is configured to supply energy to a second node based on the energy supply service procedure.

In yet another aspect, a communication apparatus is provided. The energy supply apparatus includes a memory and a processor; where the memory and the processor are coupled to each other; the memory is configured to store computer program instructions executable by the processor; and the computer program instructions, upon being executed, enable the processor to implement the energy supply method according to any of the above aspects.

In yet another aspect, a computer-readable storage medium is provided. The computer-readable storage medium is stored with computer instructions, and the computer program instructions, upon being executed on a computer (e.g., an energy supply apparatus or a signal transmission apparatus), implement the energy supply method according to any of the above aspects.

In yet another aspect, a computer program product is provided. The computer program product includes computer program instructions, and the computer program instructions, upon being executed, implement the energy supply method according to any of the above aspects.

### BRIEF DESCRIPTION OF THE DRAWINGS

FIG. 1 is a schematic diagram of an architecture of a communication system according to the embodiments of the present disclosure.
FIG. 2 is an interaction flowchart of an energy supply method according to the embodiments of the present disclosure.
FIG. 3 is a schematic diagram of a registration/authentication process according to the embodiments of the present disclosure.
FIG. 4 is a schematic diagram of another registration/authentication process according to the embodiments of the present disclosure.
FIG. 5 is a schematic diagram of an energy signal transmission process according to the embodiments of the present disclosure.
FIG. 6 is a schematic diagram of another energy signal transmission process according to the embodiments of the present disclosure.
FIG. 7 is a schematic diagram of a structure of an energy supply apparatus according to the embodiments of the present disclosure.
FIG. 8 is a schematic diagram of a structure of a communication apparatus according to the embodiments of the present disclosure.

### DETAILED DESCRIPTION

To enable those skilled in the art to better understand the technical solutions of the embodiments of the present disclosure, the technical solutions in the embodiments of the present disclosure will be described clearly and completely below with reference to the accompanying drawings in the embodiments of the present disclosure. However, the described embodiments are merely a part of the embodiments of the present disclosure, rather than all the embodiments. Based on the embodiments in the present disclosure, all other embodiments obtained by a person of ordinary skill in the art without creative efforts shall belong to the protection scope of the present disclosure.

In the description of the present disclosure, unless otherwise specified, "/" means "or", for example, A/B may represent A or B. "And/or" herein merely describes an association relationship of associated objects, indicating that three relationships may exist, for example, A and/or B may represent: only A, only B, and both A and B. In addition, "at least one" means one or more, and "multiple/plurality of" means two or more. Wordings such as "first", "second", etc. do not limit the number and execution order, and the wordings such as "first", "second", etc. also do not limit the defined objects must be different from each other.

It should be noted that, in the present disclosure, wordings such as "exemplarily" or "for example" are used to indicate examples, illustrations, or explanations. Any embodiment or design described as "exemplarily" or "for example" in the present disclosure should not be construed as being more preferred or advantageous than other embodiments or designs. To be specific, the usage of wordings such as "exemplarily" or "for example" is intended to present the relevant concepts in a concrete manner.

In an existing medium-to-long-range wireless energy supply system, energy supply devices are generally designed to serve only one or several specific types of devices, and the energy supply devices from different scenarios or different manufacturers cannot be universally applicable, resulting in low system compatibility.

In addition, in medium-to-long-range wireless energy supply systems, terminal devices that require energy supply and energy supply scenarios are complex and diverse. For example, in some scenarios, a terminal needs to be registered and authenticated before being supplied energy, while in other scenarios, a terminal that requires energy supply does not need to perform operations such as registration and authentication.

In view of this, the present disclosure proposes an energy supply method in which an energy supply service procedure is determined by a first node; and the first node supplies energy to a second node based on the energy supply service procedure. In this way, for complex and diverse terminal types and energy supply scenarios, the energy supply service procedure is first determined, and then energy supply is performed based on the energy supply service procedure, which increases system flexibility, reduces unnecessary energy supply service procedures, thereby enhancing energy supply efficiency and improving user experience.

The energy supply method provided in the embodiments of the present disclosure may be applied to various types of communication systems. For example, the systems to which the energy supply method provided in the embodiments of the present disclosure may be applied include, but are not limited to, communication systems such as long term evolution (LTE) systems, various versions evolved based on LTE, fifth generation (5G) mobile communication technology systems, etc. In addition, the energy supply method provided in the embodiments of the present disclosure may further be applicable to future-oriented communication systems (e.g., 6G communication systems), etc.

In the embodiments of the present disclosure, the communication system may at least include a first node and a second node. It should be understood that, in this example, during a charging process, the first node may be an energy supply device (e.g., including but not limited to a wireless energy supply device), and the second node may be a terminal-side device (e.g., including but not limited to a terminal); or, during a charging process, the first node may be a terminal-side device, and the second node may be an energy supply device.

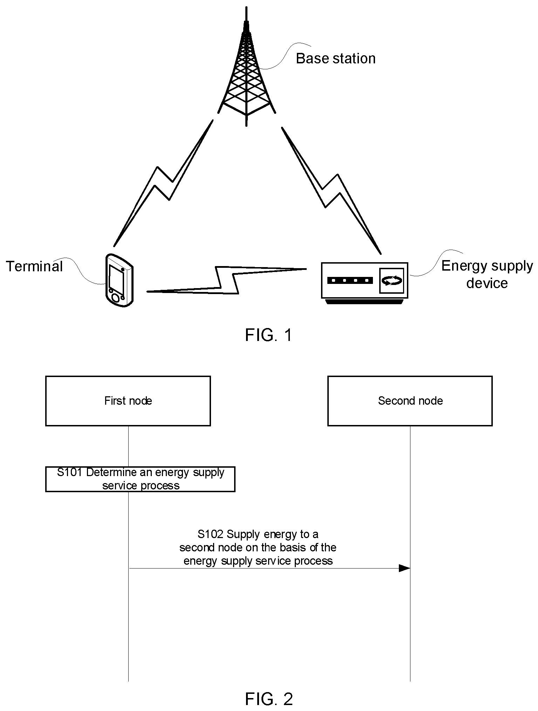

Exemplarily, taking an example in which the first node is an energy supply device and the second node is a terminal, as shown in FIG. 1, FIG. 1 is a communication system provided by the embodiments of the present disclosure, the communication system includes a terminal, an energy supply device, and a base station. There may be one or more terminals, base stations, and energy supply devices, and numbers of terminal(s), base station(s), and energy supply device(s) are not limited herein.

In some embodiments, the energy supply device provides a wireless energy supply service to the terminal, and may transmit an energy signal to the terminal device, so as to supply energy to the terminal. An energy supply device may supply energy to multiple terminals, and of course, a terminal may access multiple energy supply devices.

In some embodiments, the base station may be a base station in long term evolution (LTE), long term evolution advanced (LTE-A), or an evolutional Node B (eNB or eNodeB), a base station device in a 5G network, or a base station in a future communication system, etc. The base station may include various macro base stations, micro base stations, home base stations, wireless remote radio units, reconfigurable intelligent surfaces (RISs), routers, relays, transmission receive points (Transmitter Receiver Points, TRPs), wireless fidelity (Wi-Fi) devices, and other network-side devices.

In some embodiments, the terminal may be a device with a wireless transceiving function. The terminal may be a mobile phone, a tablet computer, a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, an internet of things device, etc. The embodiments of the present disclosure do not limit the application scenarios. The terminal may also be referred to as a user, a user equipment (UE), a user device having an independent subscriber identity module (SIM) card, an access terminal, a UE unit, a UE station, a mobile station, a mobile platform, a remote station, a remote terminal, a mobile device, a UE terminal, a communication device, a UE agent, or a UE apparatus, etc., which is not limited in the embodiments of the present disclosure.

It should be noted that FIG. 1 is only an exemplary diagram of a framework. A number of devices included in FIG. 1 and names of the devices are not limited, and in addition to the devices shown in FIG. 1, the communication system may further include other devices, such as a core network device.

The application scenarios of the embodiments of the present disclosure are not limited. The system architecture and service scenarios described in the embodiments of the present disclosure are for a purpose of illustrating the technical solutions of the embodiments of the present disclosure more clearly, and do not constitute a limitation on the technical solutions provided by the embodiments of the present disclosure. Those of ordinary skill in the art will appreciate that with the evolution of network architectures and the emergence of new business scenarios, the technical solutions provided by the embodiments of the present disclosure are equally applicable to similar technical problems.

The embodiments of the present disclosure provide an energy supply method. As shown in FIG. 2, the method at least includes S101 to S102.

In S101: a first node determines an energy supply service procedure.

In S102: the first node supplies energy to a second node based on the energy supply service procedure.

Exemplarily, taking an example in which the first node is an energy supply device and the second node is a terminal, an energy supply node, after determining an energy supply service procedure corresponding to the terminal, supplies energy to the terminal based on the energy supply service procedure corresponding to the terminal. The energy supply device may be a wireless energy supply device.

In some embodiments, the energy supply service procedure is one of a first energy supply service procedure, a second energy supply service procedure, and a third energy supply service procedure. Herein, the first energy supply service procedure includes a registration/authentication process, a triggering process, an energy transmission process, and an energy release process. The second energy supply service procedure includes a triggering process, an energy transmission process, and an energy release process. The third energy supply service procedure includes an energy transmission process and an energy release process.

In some embodiments, taking an example in which the first node is an energy supply device and the second node is a terminal, the terminal performs a registration/authentication process. Herein, the registration/authentication process refers to the terminal performing registration and authentication at a server, a core network, or an energy supply node to indicate that it is a legitimate terminal. The server, the core network, or the energy supply node maintains registration information of the terminal.

In some embodiments, taking an example in which the first node is an energy supply device and the second node is a terminal, the registration/authentication process may be performed without passing through the core network; the energy supply device itself may complete the registration and authentication for the terminal. For example, the energy supply device directly connects to the terminal using sidelink, bluetooth, wireless fidelity (Wi-Fi), or other manners to complete the registration and authentication for the terminal.

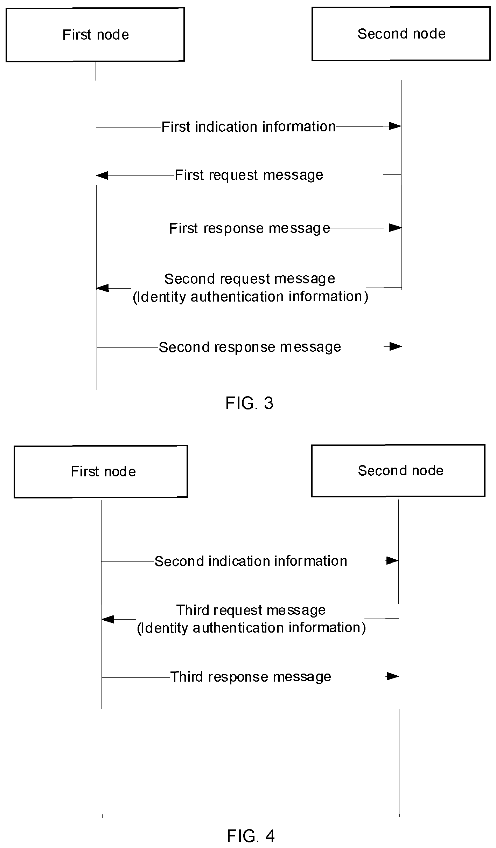

In some embodiments, as shown in FIG. 3, the registration/authentication process includes:
sending, by the first node, first indication information to the second node, where the first indication information is used to indicate an access manner;
receiving, by the first node, a first request message sent from the second node, where the first request message is used to request access;
sending, by the first node, a first response message to the second node, where the first response message is used to indicate successful access;
receiving, by the first node, a second request message sent from the second node, where the second request message is used to request registration and authentication at the first node, and the second request message includes identity authentication information of the second node; and
sending, by the first node, a second response message to the second node, where the second response message is used to indicate a registration and authentication result at the first node.

Exemplarily, taking an example in which the first node is an energy supply device and the second node is a terminal, the energy supply device first sends a broadcast message (i.e., the first indication information described above) to the terminal to inform the terminal of an access authentication manner; then the terminal initiates an access request (i.e., the first request message described above), and after receiving the first response message from the energy supply device, that is, successful access, the terminal sends a second request message to the energy supply device for registration and authentication, where the second request message includes identity authentication information; the energy supply device, after authenticating and registering the terminal, sends a second response message to the terminal, where the second response message includes a registration and authentication result of the terminal at an energy supply device side.

In some embodiments, as shown in FIG. 4, the registration/authentication process includes:
sending, by the first node, second indication message to the second node, where the second indication message is used to indicate a manner of access and registration/authentication;
receiving, by the first node, a third request message sent from the second node, where the third request message is used to request access and registration/authentication at the first node, and the third request message includes identity authentication information of the second node; and
sending, by the first node, a third response message to the second node, where the third response message is used to indicate a registration and authentication result at the first node.

Exemplarily, the energy supply device sends a broadcast message (i.e., the second indication message described above) to the terminal to inform the terminal of the a manner of access and registration/authentication; then the terminal initiates an access request (i.e., the third request message described above) to the energy supply device, and the access request carries the identity authentication information of the terminal; the energy supply device, after receiving the identity authentication information of the terminal, authenticates and registers the terminal and sends a third response message to the terminal, where the third response message is used to indicate the registration and authentication result of the terminal at the energy supply device side.

In some embodiments, taking an example in which the first node is an energy supply device and the second node is a terminal, the registration/authentication process may be a process in which a terminal having an independent subscriber identity module (SIM) card accesses a core network and performs registration and authentication, or the registration/authentication process may also be a process in which multiple terminals belonging to a same terminal access the core network through a personal mobile device (e.g., a mobile phone) or other devices as a proxy, including an access process performed on a random access channel (RACH) as specified in the fifth generation mobile communication technology (5G) standard, an access process performed on sidelink as specified in the 5G standard, or an access and authentication process specified in the institute of electrical and electronics engineers (IEEE) 802.11 protocol, or a registration and authentication process performed by relying on other manners such as bluetooth, wireless fidelity (Wi-Fi), etc., using a proxy device as a relay to access the core network.

In some embodiments, the registration/authentication process includes:
receiving, by the first node, a fourth request message sent from the second node, where the fourth request message is used to request access and registration/authentication to a core network, and the fourth request message includes identity authentication information of the second node; and
sending, by the first node, a fourth response message to the second node, where the fourth response message is used to indicate a registration and authentication result in the core network.

In some embodiments, the triggering process is mainly used to trigger a start of an energy transmission process, that is, the triggering process is used to trigger the first node to start transmitting energy to the second node. The triggering process may include triggering the first node to start energy transmission to the second node, and triggering the second node to start receiving energy.

In some embodiments, the triggering process includes: receiving, by the first node, a fifth request message sent from the second node, where the fifth request message is used to request to start energy transmission.

In some embodiments, the fifth request message includes a measurement reference signal, where the measurement reference signal is used to perform channel measurement and beam calibration for the first node.

In this way, the first node, after receiving the fifth request message sent from the second node, may start energy transmission to the second node, and simultaneously use the measurement reference signal contained in the fifth request message to perform channel measurement and beam calibration, so that the first node may adjust an energy transmission strategy based on channel measurement and beam calibration results, thereby ensuring normal energy transmission.

In some embodiments, the triggering process includes: sending, by the first node, second indication information to the second node, where the second indication information is used to indicate to start energy transmission.

In some embodiments, the second indication information includes a measurement reference signal, where the measurement reference signal is used to perform channel measurement and beam calibration for the first node.

In this way, the second node, after receiving the second indication information sent from the first node, may start preparing to receive energy, and simultaneously use the measurement reference signal contained in the second indication information to perform channel measurement and beam calibration, so that the second node informs the first node of channel measurement and beam calibration results, so as to adjust an energy transmission strategy, thereby ensuring normal energy transmission.

Exemplarily, taking an example in which the first node is an energy supply device and the second node is a terminal, the terminal and the energy supply device perform a triggering process. The process includes triggering the energy supply device to start supplying energy to the terminal, and triggering the terminal to start receiving energy. For example, in a case where the terminal requires an energy supply service, the terminal sends an energy supply request message (i.e., the fifth request message described above) to the energy supply device. For another example, it may also be that the energy supply device sends downlink notification information (i.e., the second indication information described above) to inform the terminal to start energy supply.

In some embodiments, the energy transmission process mainly refers to a process from when the first node starts supplying energy to the second node until the energy supply ends. The energy transmission process may further have other names, such as an energy supply process.

In some embodiments, the energy transmission process includes: sending, by the first node, an energy signal to the second node.

In some embodiments, the energy transmission process further includes a periodic authentication and a periodic measurement process. The periodic authentication refers to periodically receiving identity authentication information sent from the second node. The periodic measurement refers to periodically receiving a measurement result sent from the second node or periodically receiving a reference signal sent from the second node, where the measurement result is determined based on the energy signal received by the second node.

The measurement result includes an energy received power, an energy transmission power, and channel information. The reference signal carries the identity authentication information of the second node.

In this way, the periodic authentication may help the first node periodically receive and verify the identity authentication information of the second node, so as to ensure security and reliability of network communication. The periodic measurement may help the first node perform channel measurement and beam calibration, thereby achieving high-efficiency energy transmission.

In some embodiments, the first node and the second node, after the energy transmission process ends, further need to perform an energy release process. Herein, the energy release process mainly refers to a process of terminating energy transmission, including the first node informing the second node to terminate energy transmission or the second node informing the first node to terminate energy transmission. The energy release process may further have other names, such as a release process, which is not limited in the present disclosure.

In some embodiments, the energy release process includes:
sending, by the first node, third indication information to the second node, where the third indication information is used to indicate to stop supplying energy to the second node; or
receiving, by the first node, fourth indication information sent from the second node, where the fourth indication information is used to indicate to stop supplying energy to the second node; or
stopping supplying energy to the second node, in response to the first node not receiving a signal sent from the second node for a time exceeding a preset time, where the signal includes a reference signal, a measurement result, or identity authentication information.

For example, taking an example in which the first node is an energy supply device and the second node is a terminal, in a case where the terminal expects to stop energy supply, the terminal sends an energy supply termination request signal (i.e., the fourth indication information described above) to inform the energy supply device to stop energy supply; or, due to deterioration of a channel condition or other reasons, the energy supply device sends a downlink signal (i.e., the third indication information described above) to inform the terminal of energy supply termination. In some cases, the process may further be that during energy supply, the terminal unilaterally stops sending a signal (the signal including an uplink reference signal, a reported measurement result, and identity authentication information), and the energy supply device stops supplying energy to the terminal in a case where the energy supply device does not receive the signal within a preset time.

In some embodiments, the first node determining the energy supply service procedure includes: determining, by the first node, the energy supply service procedure according to an energy supply service scenario.

In some embodiments, the first node determining the energy supply service procedure includes: determining, by the first node, the energy supply service procedure according to a type of the second node.

In some embodiments, an uplink signal (e.g., the first request message, the second request message, the third request message, the fourth request message, or the fifth request message described above) sent from the second node to the first node includes type information of the second node, and the first node determines the type of the second node based on the uplink signal. In this way, determining the type of the second node based on the uplink signal avoids sending additional information for indicating the type of the second node, saving resources, and facilitating a subsequent energy supply from the first node to the second node based on the type of the second node, thereby helping to improve energy supply efficiency.

In some embodiments, the type of the second node is determined according to at least one of:
determining that the type of the second node is a first type, in response to receiving a message sent from the second node is a first type message; where the first type message includes at least one of: a first request message, a third request message, or a fourth request message; where the first request message is used to request access, the third request message is used to request access and registration/authentication at the first node, and the fourth request message is used to request access and registration/authentication to a core network;
determining that the type of the second node is a second type, in response to not receiving the first type message sent from the second node and receiving a fifth request message sent from the second node; where the fifth request message is used to request to start energy transmission; or
determining that the type of the second node is a third type, in response to not receiving the first type message and the fifth request message sent from the second node and receiving a sixth request message sent from the second node; where the sixth request message includes a binary on-off keying (OOK) signal.

In some embodiments, the determining the energy supply service procedure according to the type of the second node includes:
determining that the energy supply service procedure corresponding to the second node is the first energy supply service procedure, in response to the type of the second node being the first type;
determining that the energy supply service procedure corresponding to the second node is the second energy supply service procedure, in response to the type of the second node being the second type; or
determining that the energy supply service procedure corresponding to the second node is the third energy supply service procedure, in response to the type of the second node being the third type.

Exemplarily, the energy supply service procedure corresponding to the second node is the second energy supply service procedure. Taking an example in which the first node is an energy supply device and the second node is a terminal, the energy supply service procedure based on which the energy supply device supplies energy to the terminal includes the triggering process, the energy transmission process, and the energy release process, that is, the registration/authentication process is not required.

For example, in some special scenarios such as home, factory, hospital, etc., where there is a low probability of an illegitimate terminal, the terminal does not need to perform the registration/authentication process; or, for some internet of things terminals that do not have a capability to perform registration/authentication upon providing wireless energy supply, the registration/authentication process is not required.

For example, in some cases, when some terminals can only send several preset waveforms or simple OOK signals, the registration/authentication process is not required. The energy supply service procedure based on which the energy supply device supplies energy to those terminals includes the triggering process, the energy transmission process, and the energy release process. In this case, the terminal may use several specific waveforms or several specific OOK sequences to represent an energy supply request signal (e.g., the fifth request message or the second indication information described above), different measurement results, and an energy supply termination request signal (e.g., the third indication information or the fourth indication information described above).

Exemplarily, taking an example in which the first node is an energy supply device and the second node is a terminal, the energy supply service procedure based on which the energy supply device supplies energy to the terminal is the third energy supply service procedure, that is, the energy supply service procedure includes the energy transmission process and the energy release process, meaning that the registration/authentication process and the triggering process are not required. For example, in some cases (e.g., the terminal has no power), the terminal cannot send an energy supply request signal (e.g., the fifth request message described above) to the wireless energy supply device, so the terminal cannot complete the triggering process; the energy supply service procedure based on which the energy supply device supplies energy to the terminal is the third energy supply service procedure. For another example, for special terminals such as some internet of things sensors, the terminal itself has no energy reserve and needs to rely on energy provided by the energy supply device to operate; in this case, the energy supply service procedure based on which the energy supply device supplies energy to the terminal also does not need to include the triggering process.

In some embodiments, the first node sends an energy signal to the second node periodically until receiving a response message from the second node, and then starts supplying energy to the second node, in response to the energy supply service procedure corresponding to the second node being the third energy supply service procedure; where the response message includes beam calibration information of the energy signal.

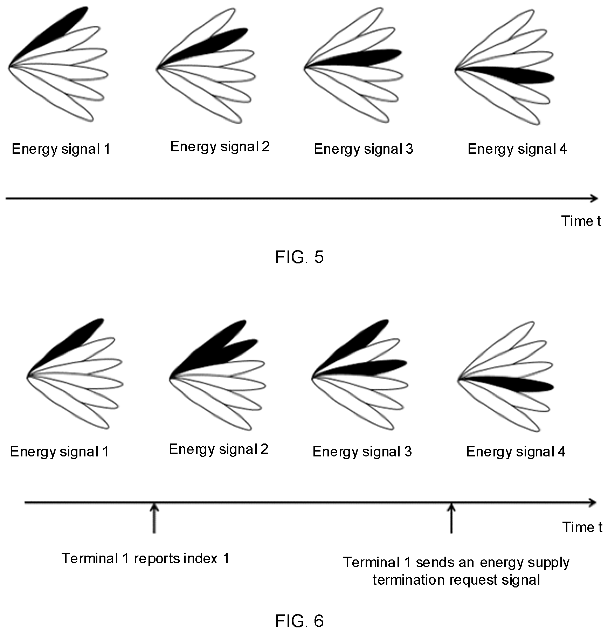

Exemplarily, taking an example in which the first node is an energy supply device and the second node is a terminal, FIG. 5 shows a schematic diagram of an energy signal transmission process. The energy supply device sends an energy signal in a beam scanning manner, sending energy signals using different beams at different times. The terminal, after receiving an energy signal from a certain direction, may obtain index information of the energy signal and carry the index information in a response signal for reporting, thereby helping the energy supply device to perform beam calibration. If the terminal reports a certain index i, it means that an i-th beam has been activated. In subsequent beam scanning processes, the i-th beam is sent each time, and other beams are sent in sequence, as shown in FIG. 6, upon terminal 1 reports index 1, a beam of energy signal 1 is sent in each scan, while upon the terminal 1 sends an energy supply termination request signal, the beam 1 is released.

Based on the above, for complex and diverse terminal types and energy supply scenarios, the energy supply service procedure is first determined, and then energy supply is performed based on the determined process, which increases system flexibility, thereby enhancing energy supply efficiency and improving user experience.

The above mainly describes the solutions of the embodiments of the present disclosure from a method perspective. An energy supply apparatus is further described below. The energy supply apparatus is configured to execute the energy supply method in any of the above embodiments and possible implementations thereof. An energy supply apparatus is configured to execute the energy supply method in any of the above embodiments and possible implementations thereof.

It can be understood that, in order to implement the energy supply method, the energy supply apparatus includes corresponding hardware structures and/or software modules for executing each function. Those skilled in the art should easily realize that, in combination with the algorithm steps of the examples described in the embodiments of the present disclosure, the present disclosure can be implemented in hardware or a combination of hardware and computer software. Whether a function is performed by hardware or by computer software driving hardware depends on the intended application and design constraint conditions of the technical solution. Professional technicians may use different methods for each specific application to implement the described functions, however, such implementation should not be considered as going beyond the scope of the present disclosure.

The embodiments of the present disclosure may divide the functional modules of the energy supply apparatus according to the above method embodiments. For example, each functional module may be divided corresponding to each function, or two or more functions may be integrated into a functional module. The integrated module may be implemented in a form of hardware or in a form of software. It should be noted that the division of modules in the embodiments of the present disclosure is schematic and is merely a logical functional division; there may be other division manners in actual implementation. The following description takes an example in which the division of each functional module corresponding to each function.

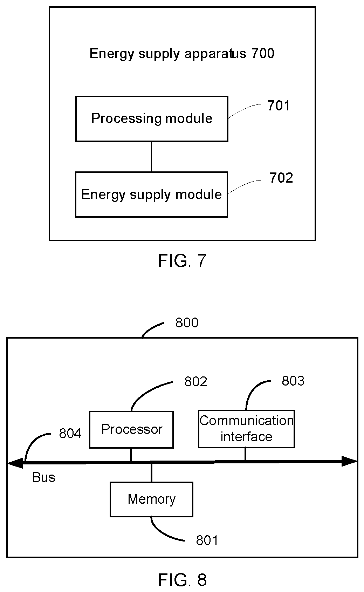

FIG. 7 is a schematic diagram of a structure of an energy supply apparatus provided by the embodiments of the present disclosure, applied to a first node. The energy supply apparatus 700 includes: a processing module 701 and an energy supply module 702.

The processing module 701 is configured to determine an energy supply service procedure.

The energy supply module 702 is configured to supply energy to a second node based on the energy supply service procedure.

In some embodiments, the energy supply service procedure is one of a first energy supply service procedure, a second energy supply service procedure, and a third energy supply service procedure. Herein, the first energy supply service procedure includes a registration/authentication process, a triggering process, an energy transmission process, and an energy release process; the second energy supply service procedure includes a triggering process, an energy transmission process, and an energy release process; the third energy supply service procedure includes an energy transmission process and an energy release process; where the triggering process is for triggering the first node to start energy transmission to the second node.

In some embodiments, the registration/authentication process includes:
sending first indication information to the second node, where the first indication information is used to indicate an access manner;
receiving a first request message sent from the second node, where the first request message is used to request access;
sending a first response message to the second node, where the first response message is used to indicate successful access;
receiving a second request message sent from the second node, where the second request message is used to request registration and authentication at the first node, and the second request message includes identity authentication information of the second node;
sending a second response message to the second node, where the second response message is used to indicate a registration and authentication result at the first node.

In some embodiments, the registration/authentication process includes:
sending second indication message to the second node, where the second indication message is used to indicate a manner of access and registration/authentication;
receiving a third request message sent from the second node, where the third request message is used to request access and registration/authentication at the first node, and the third request message includes identity authentication information of the second node; and
sending a third response message to the second node, where the third response message is used to indicate a registration and authentication result at the first node.

In some embodiments, the registration/authentication process includes:
receiving a fourth request message sent from the second node, where the fourth request message is used to request access and registration/authentication to a core network, and the fourth request message includes identity authentication information of the second node; and
sending a fourth response message to the second node, where the fourth response message is used to indicate a registration and authentication result in the core network.

In some embodiments, the triggering process includes:
receiving a fifth request message sent from the second node, where the fifth request message is used to request to start energy transmission; or
sending second indication information to the second node, where the second indication information is used to indicate to start energy transmission.

In some embodiments, the fifth request message includes a measurement reference signal, where the measurement reference signal is used to perform channel measurement and beam calibration for the first node.

In some embodiments, the second indication information includes a measurement reference signal, where the measurement reference signal is used to perform channel measurement and beam calibration for the first node.

In some embodiments, the energy transmission process includes: sending an energy signal to the second node.

In some embodiments, the energy transmission process further includes a periodic authentication and a periodic measurement process, where the periodic authentication refers to periodically receiving identity authentication information sent from the second node, and the periodic measurement refers to periodically receiving a measurement result sent from the second node or periodically receiving a reference signal sent from the second node, where the measurement result is determined based on the energy signal received by the second node.

In some embodiments, the measurement result includes an energy received power, an energy transmission power, and channel information, and the reference signal carries the identity authentication information of the second node.

In some embodiments, the energy release process includes:
sending third indication information to the second node, where the third indication information is used to indicate to stop supplying energy to the second node; or
receiving fourth indication information sent from the second node, where the fourth indication information is used to indicate to stop supplying energy to the second node; or
stopping supplying energy to the second node, in response to not receiving a signal sent from the second node for a time exceeding a preset time, where the signal includes a reference signal, a measurement result, or identity authentication information.

In some embodiments, determining the energy supply service procedure includes: determining the energy supply service procedure according to a type of the second node.

In some embodiments, the type of the second node is determined according to at least one of:
determining that the type of the second node is a first type, in response to receiving a message sent from the second node is a first type message; where the first type message includes at least one of: a first request message, a third request message, or a fourth request message; where the first request message is used to request access, the third request message is used to request access and registration/authentication at the first node, and the fourth request message is used to request access and registration/authentication to a core network;
determining that the type of the second node is a second type, in response to not receiving the first type message sent from the second node and receiving a fifth request message sent from the second node; where the fifth request message is used to request to start energy transmission; or
determining that the type of the second node is a third type, in response to not receiving the first type message and the fifth request message sent from the second node and receiving a sixth request message sent from the second node; where the sixth request message includes an on-off keying (OOK) signal.

In some embodiments, the determining the energy supply service procedure according to the type of the second node includes:
determining that the energy supply service procedure corresponding to the second node is the first energy supply service procedure, in response to the type of the second node being the first type;
determining that the energy supply service procedure corresponding to the second node is the second energy supply service procedure, in response to the type of the second node being the second type; or
determining that the energy supply service procedure corresponding to the second node is the third energy supply service procedure, in response to the type of the second node being the third type.

In some embodiments, the energy supply module 702 is further configured to send an energy signal to the second node periodically until receiving a response message from the second node, and then start supplying energy to the second node, in response to the energy supply service procedure corresponding to the second node being the third energy supply service procedure; where the response message includes beam calibration information of the energy signal.

In a case where the integrated modules described above are implemented in hardware, the embodiments of the present disclosure further provides a structure of a communication apparatus. The communication apparatus is configured to execute the energy supply method provided in the embodiments of the present disclosure. As shown in FIG. 8, the communication apparatus 800 includes: a memory 801, a processor 802, a communication interface 803, and a bus 804.

The memory 801 may be a read-only memory (ROM) or another type of static storage device that may store static information and instructions, or may be a random access memory (RAM) or another type of dynamic storage device that may store dynamic information and instructions, or may be an electrically erasable programmable read-only memory (EEPROM), a magnetic disk storage medium or other magnetic storage device, or any other medium that can be used to carry or store desired program code in a form of instructions or data structures and that can be accessed by a computer, but is not limited thereto.

The processor 802 may be configured to be a device that implements or executes logic blocks, modules, and circuits of various exemplary methods described in connection with the embodiments of the present disclosure. The processor 802 may be a central processing unit, a general-purpose processor, a digital signal processor, an application-specific integrated circuit, a field programmable gate array, or other programmable logic device, a transistor logic device, a hardware component, or any combination thereof. The processor 802 may also implement or execute various exemplary logic blocks, modules, and circuits described in connection with the embodiments of the present disclosure. The processor 802 may also be a combination that implements computing functions, for example, a combination including one or more microprocessors, a combination of a digital signal processor (DSP) and a microprocessor, etc.

The communication interface 803 is used to connect with other devices via a communication network. The communication network may be Ethernet, a wireless access network, a wireless local area network (WLAN), etc.

In an implementation, the memory 801 may be independent of the processor 802, and the memory 801 may be connected to the processor 802 via the bus 804 for storing instructions or program codes. The processor 802, upon revoking and executing the instructions or program codes stored in the memory 801, can implement the energy supply method provided in the embodiments of the present disclosure.

In an implementation, the memory 801 may also be integrated with the processor 802.

The bus 804 may be an extended industry standard architecture (EISA) bus, etc. The buses 804 may be classified into an address bus, a data bus, a control bus, etc. For ease of representation, only one thick line is used in FIG. 8 to represent the bus 804, however, this does not mean that there is only one bus or one type of bus.

Some embodiments of the present disclosure provide a computer-readable storage medium (e.g., a non-transitory computer-readable storage medium). The computer-readable storage medium is stored with computer program instructions. The computer program instructions, upon being run on a computer, enable the computer to execute the energy supply method according to any of the above embodiments.

In an exemplary implementation, the computer may be the communication apparatus described above. The present disclosure does not limit the specific form of the computer.

In some examples, the computer-readable storage medium may include, but is not limited to, magnetic storage devices (e.g., hard disks, floppy disks, or magnetic tapes, etc.), optical disks (e.g., compact disks (CDs), digital versatile disks (DVDs), etc.), smart cards, and flash memory devices (e.g., erasable programmable read-only memory (EPROM), cards, sticks, or key drives, etc.). The various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product containing instructions. The computer program product, upon being run on a computer, enable the computer to execute the energy supply method according to any of the above embodiments.

The above are merely specific implementations of the present disclosure, however, the protection scope of the present disclosure is not limited thereto. Any changes or substitutions within the technical scope disclosed in the present disclosure shall be covered by the protection scope of the present disclosure. Therefore, the protection scope of the present disclosure shall be subject to the protection scope of the claims.

## Claims

1. An energy supply method, applied to a first node, wherein the method comprises:
determining an energy supply service procedure; and
supplying energy to a second node based on the energy supply service procedure.

2. The method according to claim 1, wherein the energy supply service procedure is one of a first energy supply service procedure, a second energy supply service procedure, and a third energy supply service procedure; wherein the first energy supply service procedure includes a registration/authentication process, a triggering process, an energy transmission process, and an energy release process; the second energy supply service procedure includes a triggering process, an energy transmission process, and an energy release process; the third energy supply service procedure includes an energy transmission process and an energy release process; wherein the triggering process is for triggering the first node to start energy transmission to the second node.

3. The method according to claim 2, wherein the registration/authentication process comprises:
sending first indication information to the second node, wherein the first indication information is used to indicate an access manner;
receiving a first request message sent from the second node, wherein the first request message is used to request access;
sending a first response message to the second node, wherein the first response message is used to indicate successful access;
receiving a second request message sent from the second node, wherein the second request message is used to request registration and authentication at the first node, and the second request message includes identity authentication information of the second node; and
sending a second response message to the second node, wherein the second response message is used to indicate a registration and authentication result at the first node.

4. The method according to claim 2, wherein the registration/authentication process comprises:
sending second indication message to the second node, wherein the second indication message is used to indicate a manner of access and registration/authentication;
receiving a third request message sent from the second node, wherein the third request message is used to request access and registration/authentication at the first node, and the third request message includes identity authentication information of the second node; and
sending a third response message to the second node, wherein the third response message is used to indicate a registration and authentication result at the first node.

5. The method according to claim 2, wherein the registration/authentication process comprises:
receiving a fourth request message sent from the second node, wherein the fourth request message is used to request access and registration/authentication to a core network, and the fourth request message includes identity authentication information of the second node; and
sending a fourth response message to the second node, wherein the fourth response message is used to indicate a registration and authentication result in the core network.

6. The method according to claim 2, wherein the triggering process comprises:
receiving a fifth request message sent from the second node, wherein the fifth request message is used to request to start energy transmission; or
sending second indication information to the second node, wherein the second indication information is used to indicate to start energy transmission.

7. The method according to claim 6, wherein the fifth request message includes a measurement reference signal, wherein the measurement reference signal is used to perform channel measurement and beam calibration for the first node.

8. The method according to claim 6, wherein the second indication information includes a measurement reference signal, wherein the measurement reference signal is used to perform channel measurement and beam calibration for the first node.

9. The method according to claim 2, wherein the energy transmission process comprises: sending an energy signal to the second node.

10. The method according to claim 9, wherein the energy transmission process further comprises a periodic authentication and a periodic measurement process, wherein the periodic authentication refers to periodically receiving identity authentication information sent from the second node, and the periodic measurement refers to periodically receiving a measurement result sent from the second node or periodically receiving a reference signal sent from the second node, wherein the measurement result is determined based on the energy signal received by the second node.

11. The method according to claim 10, wherein the measurement result includes an energy received power, an energy transmission power, and channel information, and the reference signal carries the identity authentication information of the second node.

12. The method according to claim 2, wherein the energy release process comprises:
sending third indication information to the second node, wherein the third indication information is used to indicate to stop supplying energy to the second node; or
receiving fourth indication information sent from the second node, wherein the fourth indication information is used to indicate to stop supplying energy to the second node; or
stopping supplying energy to the second node, in response to not receiving a signal sent from the second node for a time exceeding a preset time, wherein the signal includes a reference signal, a measurement result, or identity authentication information.

13. The method according to claim 2, wherein the determining the energy supply service procedure comprises:
determining the energy supply service procedure according to a type of the second node.

14. The method according to claim 13, wherein the type of the second node is determined according to at least one of:
determining that the type of the second node is a first type, in response to receiving a message sent from the second node is a first type message; wherein the first type message includes at least one of: a first request message, a third request message, or a fourth request message; wherein the first request message is used to request access, the third request message is used to request access and registration/authentication at the first node, and the fourth request message is used to request access and registration/authentication to a core network;
determining that the type of the second node is a second type, in response to not receiving the first type message sent from the second node and receiving a fifth request message sent from the second node; wherein the fifth request message is used to request to start energy transmission; or
determining that the type of the second node is a third type, in response to not receiving the first type message and the fifth request message sent from the second node and receiving a sixth request message sent from the second node; wherein the sixth request message includes an on-off keying (OOK) signal.

15. The method according to claim 14, wherein the determining the energy supply service procedure according to the type of the second node comprises:
determining that the energy supply service procedure corresponding to the second node is the first energy supply service procedure, in response to the type of the second node being the first type;
determining that the energy supply service procedure corresponding to the second node is the second energy supply service procedure, in response to the type of the second node being the second type;
determining that the energy supply service procedure corresponding to the second node is the third energy supply service procedure, in response to the type of the second node being the third type.

16. The method according to claim 15, further comprising:
sending an energy signal to the second node periodically until receiving a response message from the second node, and starting to supply energy to the second node, in response to the energy supply service procedure corresponding to the second node being the third energy supply service procedure; wherein the response message includes beam calibration information of the energy signal.

17. A communication apparatus, comprising: a memory and a processor; wherein the memory and the processor are coupled to each other; the memory is configured to store instructions executable by the processor; and the processor, upon executing the instructions, performs the method according to any one of claims 1 to 16.

18. A computer-readable storage medium, wherein the computer-readable storage medium is stored with computer instructions, and the computer instructions, upon being executed on a communication apparatus, enable the communication apparatus to perform the method according to any one of claims 1 to 16.
